# FASCICULE DE BREVET EUROPEEN

(11) **EP 1 596 283 B1**
(45) Date de publication et mention de la délivrance du brevet: **01.07.2009**
(21) Numéro de dépôt: 05103901.4
(22) Date de dépôt: 10.05.2005
(51) Int. Cl.: G06F 9/32

(54) **Protection d'un branchement dans un programme**
Verzweigungsschutz in einem Programm
Branch protection in a program

(30) Priorité: 11.05.2004 FR 0450910
(43) Date de publication de la demande: 16.11.2005
(73) Titulaire: ST MICROELECTRONICS S.A., 92120 Montrouge (FR)
(72) Inventeur: Elias, Pierre, 13530 Trets (FR); Liardet, Pierre-Yvan, 13790 Peynier (FR); Teglia, Yannick, 13011 Marseille (FR)
(74) Mandataire: de Beaumont, Michel

(56) Documents cités:
- WO-A-00/42511
- US-A1- 2003 101 351

## Description

La présente invention concerne, de façon générale, la réalisation de branchements ou sauts d'instructions dans un programme exécuté par un microprocesseur. L'invention concerne plus particulièrement les branchements réalisés par un programme mettant en oeuvre des quantités secrètes que l'on souhaite rendre indétectables par un éventuel pirate.

Dans la plupart des programmes ou algorithmes exécutés par un microprocesseur, on trouve des branchements conditionnels, c'est-à-dire des étapes au cours desquelles le programme sélectionne l'instruction suivante à exécuter parmi deux instructions différentes. Ces branchements (jumps) sont généralement décidés en fonction de l'état d'un bit drapeau ou de condition (flag). Selon l'état de ce bit drapeau, l'exécution du programme se poursuit par une instruction ou une autre. C'est à ce moment qu'intervient le branchement conditionnel vers une adresse différente du programme.

Un tel fonctionnement est parfaitement satisfaisant dans de nombreuses applications. Toutefois, dans des programmes manipulant des quantités secrètes ou plus généralement mettant en oeuvre des algorithmes pour lesquels on ne souhaite pas qu'un utilisateur non autorisé soit capable de modifier le séquencement du programme, de tels branchements constituent des points particulièrement vulnérables.

En particulier, un type d'attaques répandue pour déduire de l'exécution d'un algorithme des quantités secrètes, connu sous le nom d'attaques par injection de fautes, consiste à forcer le déroutement d'un programme en introduisant une perturbation (par exemple, sur l'alimentation du processeur), à des positions stratégiques d'exécution du programme. De telles injections de fautes permettent ensuite de découvrir les quantités secrètes manipulées. Par exemple, et de façon simplifiée, si un branchement conditionnel vérifie l'exactitude d'une clé par rapport à une clé pré-enregistrée, le branchement conditionnel vers les instructions autorisées ne doit pas se produire si la bonne clé n'est pas introduite dans une variable correspondante du programme. En présentant une mauvaise clé et en provoquant des perturbations sur l'exécution du programme (injection de fautes), un mauvais (illicite) branchement conditionnel ayant pour effet l'acceptation de la mauvaise clé va statistiquement se produire. Or, il suffit que le branchement soit autorisé une fois pour permettre à un pirate d'exploiter les traitements exécutés par l'algorithme et pirater ainsi le programme.

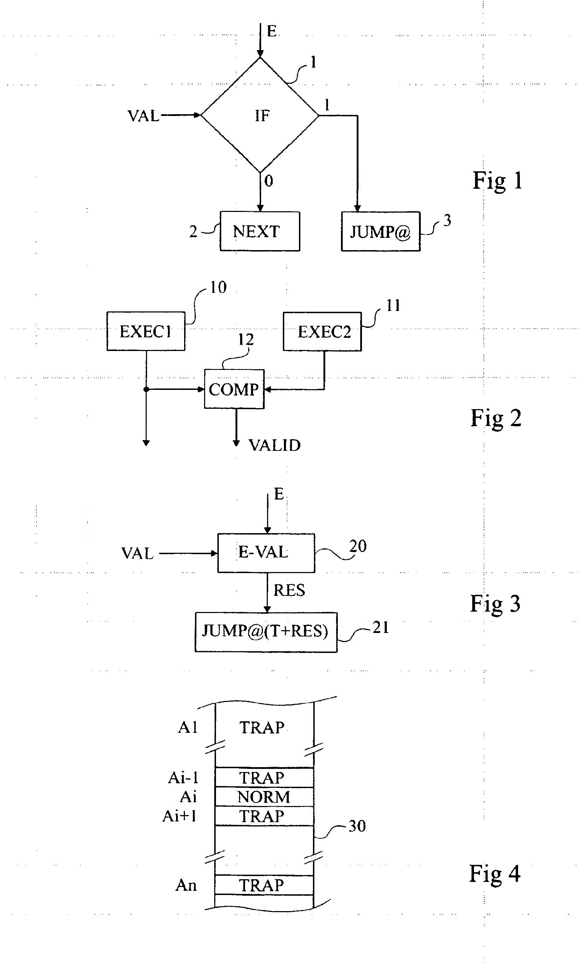

La figure 1 illustre de façon très schématique un mode d'exécution d'un branchement classique dans un programme. Quelles que soient les variables traitées en entrée E, à chaque fois qu'un test (bloc 1, IF) est prévu dans un programme, l'instruction qui suit dans le déroulement du programme est différente au moins dans son adresse d'exécution. Par exemple, si le test est négatif (état 0 en sortie), l'instruction exécutée est souvent l'instruction suivante (bloc 2, NEXT). Par contre, si le test est validé (état 1 en sortie), le programme exécute une instruction (bloc 3, JUMP) à une autre adresse @ dans le programme ou dans un sous-programme. Le cas échéant, les deux sorties conditionnent des branchements sur des adresses différentes.

Pour protéger l'exécution des programmes contre des injections de fautes, deux techniques sont classiquement utilisées.

La figure 2 illustre, de façon très schématique et sous forme de blocs, une première technique de protection de l'exécution d'un programme contre des injections de fautes. Cette technique consiste à effectuer deux exécutions (bloc 10, EXEC 1 et bloc 11, EXEC 2) du même programme en parallèle, ou décalées dans le temps, et à comparer (BLOC 12, COMP) les résultats fournis par chacune des exécutions pour valider l'exécution correcte du programme. Le comparateur 12 fournit, par exemple, un bit d'état VALID indicateur que les résultats des deux exécutions sont identiques, validant donc l'exécution du programme sans injection de faute. Le résultat utilisé est indifféremment celui de l'une ou l'autre des exécutions (par exemple celui du bloc 10).

Un inconvénient de cette technique est soit qu'elle requiert deux cellules matérielles d'exécution du programme dans le cas d'une exécution parallèle, soit qu'elle prend du temps dans la mesure où le programme doit être exécuté deux fois avant que l'on puisse prendre en compte un résultat valide.

Une deuxième technique connue consiste à calculer des signatures de deux exécutions en parallèle du même programme pour, là encore, comparer les signatures par rapport à une signature pré-enregistrée ou l'une par rapport à l'autre. Comme dans le cas de la figure 2, cela requiert deux exécutions donc deux cellules matérielles, ou deux fois plus de temps. De plus, le circuit intégré exécutant le programme doit disposer des fonctions permettant de calculer de telles signatures.

Un inconvénient supplémentaire des deux techniques classiques décrites ci-dessus est qu'elles ne permettent qu'une détection a posteriori.

Un problème technique est qu'un programme doit avoir une exécution reproductible, c'est-à-dire qu'il doit se dérouler correctement en l'absence de tentative de piratage. En d'autres termes, ce problème technique est lié au fait que le programme et notamment les branchements conditionnels doivent être prévus à l'avance pour un fonctionnement donné du programme, ce qui le rend sensible aux attaques par injection de fautes.

Le document WO-A-00/42511 décrit un système de branchement dans un programme, dans lequel l'adresse d'un saut est fonction du résultat d'un test conditionnel prenant en compte une adresse de base et une variable. Ce document vise à éviter les piratages par analyse de la consommation du circuit intégré exécutant le programme. Une telle solution est inefficace sur des attaques par injection de fautes que vise la présente invention.

La présente invention vise à pallier les inconvénients des techniques connues pour éviter les déroutements des programmes.

L'invention vise en particulier à réduire la vulnérabilité d'un branchement dans un programme.

L'invention vise en outre à proposer une solution qui soit compatible avec le besoin de reproductibilité de l'exécution d'un programme.

Plus généralement, l'invention vise à proposer une nouvelle technique de réalisation d'un branchement conditionnel dans un programme exécuté par un processeur.

Pour atteindre ces objets ainsi que d'autres, la présente invention prévoit un procédé de réalisation d'au moins un branchement dans un programme exécuté par un processeur, consistant :
à déterminer un résultat sur plusieurs bits comme indicateur d'un respect d'une condition souhaitée, le résultat correspondant à une opération prenant en compte au moins une valeur prédéterminée et au moins une variable courante ; et
à calculer une adresse de branchement fonction du résultat.

Des instructions pièges sont placées aux adresses respectives où conduit le branchement dans le cas où la variable ne respecte pas la condition attendue.

Selon un mode de mise en oeuvre de la présente invention, le résultat est fonction d'un nombre aléatoire tiré à chaque début d'exécution du programme, une table de conversion d'adresses étant mémorisée à chaque début d'exécution.

Selon un mode de mise en oeuvre de la présente invention, un même résultat est utilisé pour des branchements conditionnels différents d'un même programme, chaque branchement conditionnel autorisé correspondant à un résultat différent.

L'invention prévoit également un procédé pour réduire la vulnérabilité d'au moins un branchement dans un programme.

L'invention prévoit également un processeur intégré d'exécution d'un programme, comportant des moyens de calcul d'adresse.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
les figures 1 et 2 qui ont été décrites précédemment sont destinées à exposer l'état de la technique et le problème posé ;
la figure 3 illustre, de façon très schématique et sous forme de blocs, un mode de mise en oeuvre du procédé selon la présente invention ;
la figure 4 illustre l'allure du contenu d'une mémoire adressable selon le mode de mise en oeuvre de la figure 3 ; et
la figure 5 illustre un deuxième mode de mise en oeuvre de la présente invention.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, les données conditionnant le ou les branchements à exécuter n'ont pas été détaillées, l'invention étant compatible avec n'importe quel type de branchement et de données de condition.

La figure 3 représente, par des blocs schématiques, les étapes d'un branchement selon un premier mode de mise en oeuvre de l'invention.

Comme précédemment, on souhaite effectuer un branchement à partir d'une comparaison de deux données à savoir une donnée d'entrée E et une valeur de consigne VAL (seuil, autre donnée d'exécution du programme, etc.).

Selon l'invention, au lieu de comparer ces deux données pour fournir un résultat binaire, on calcule un résultat RES d'une opération mathématique sur les données E et VAL. Dans l'exemple simplifié de la figure 3, on suppose que cette opération est une soustraction (bloc 20, E-VAL). Par conséquent, la donnée RES est ici égale à E-VAL. On notera toutefois que n'importe quelle opération mathématique peut être utilisée, pourvu de fournir un résultat sur plusieurs bits. L'invention remplace donc un saut conditionnel par un saut absolu.

La valeur RES sert, selon l'invention, d'incrément à une instruction de branchement (bloc 21, JUMP @(T+RES)). Plus le nombre de bits de codage du résultat RES est important, plus on réduit la probabilité de sauter par hasard au bon endroit.

Pour mettre en oeuvre la présente invention, la mémoire dans laquelle sont stockées les instructions à exécuter doit être organisée de façon spécifique.

La figure 4 illustre, de façon très schématique, un mode d'organisation d'une telle mémoire 30.

Une adresse Aᵢ correspondant à l'adresse calculée avec un résultat RES valide (Ai = T+RES). Le saut exécuté par le programme conduit alors à une instruction ou un groupe d'instructions normal NORM.

Selon un premier mode de mise en oeuvre, toutes les autres adresses sur laquelle tombe l'instruction de saut si le résultat RES n'est pas valide (adresses A₁, ... Aᵢ₋₁, Aᵢ₊₁, ..., Aₙ) conduisent à des instructions piège TRAP. De telles instructions peuvent consister en des boucles infinies, en des sorties directes du programme, en des destructions de la pièce ou tout autre instruction de blocage utilisée couramment dans des programmes manipulant des données secrètes. Par exemple, on pourra utiliser le procédé décrit dans la demande de brevet américain n°2003-0101351.

Bien sûr, à chaque adresse A ne correspond généralement pas une seule instruction mais un groupe d'instructions se terminant, soit par un autre branchement, soit par un retour vers l'instruction (bloc 21, figure 3) suivant dans le code programme celle en ayant appelé l'exécution.

Ainsi, lors de l'écriture du programme dans lequel on souhaite rendre les branchements non modifiables par la mise en oeuvre de l'invention, on positionne les instructions de façon particulière en fonction des résultats attendus pour le calcul d'adresse. Prévoir une telle organisation du programme ne pose pas de difficulté particulière et est à la portée de l'homme du métier.

Un avantage de l'invention est que, si un pirate tente de forcer l'exécution du programme par des attaques par injection de fautes, la probabilité qu'il tombe sur le résultat RES correct est considérablement réduite dans la mesure où il constitue un mot sur plusieurs bits.

A première vue, la mise en oeuvre de l'invention paraît compliquer l'exécution d'un branchement. En effet, le temps d'exécution d'un branchement conditionnel classique conditionné par un seul bit est moindre que le temps d'exécution du calcul d'adresse requis par l'invention. Toutefois, les avantages procurés par l'invention notamment en réduisant considérablement la vulnérabilité du branchement (sa mise en défaut) compense très largement ce temps opératoire supplémentaire.

Plusieurs instructions de branchement 21 prévues par l'invention peuvent être disposées à différents endroits du programme même si chacune ne conduit qu'à un seul résultat valide. Pour cela, l'adresse de base T est l'adresse à partir de laquelle sont disposés tous les traitements (et notamment les pièges) du branchement considéré tandis que le décalage RES conduit à l'adresse valable.

Au lieu d'une simple addition comme prévu dans l'exemple simplifié de la figure 3, les opérations plus complexes peuvent être mises en oeuvre dans le calcul de l'adresse de branchement.

Selon un autre mode de mise en oeuvre de l'invention, la valeur résultat RES est susceptible de conduire à plusieurs branchements valides. Dans ce cas, l'adresse de base T de l'instruction de branchement utilisée conditionne le branchement effectif dans une catégorie ou une autre selon l'état du mot RES.

Pour donner un exemple très simplifié d'un tel mode de mise en oeuvre, supposons un mot RES sur deux bits et une adresse de base T sur un seul bit, une adresse complète étant sur trois bits. Supposons que, pour une première fonction, la valeur RES valide est 10 alors que pour une deuxième fonction la valeur RES valide est 01. On voit que cela revient à considérer que chacun des bits correspond à un drapeau. Supposons que pour la première fonction, l'adresse de base T vaut 0 tandis que pour la deuxième fonction elle vaut 1. Dans un tel cas, les adresses valides dans la mémoire seront respectivement 010 et 101. Les six autres adresses disponibles peuvent contenir des fonctions piège ou d'autres fonctions valides si le calcul (bloc 20, figure 3) du résultat ne risque pas d'y conduire.

L'exemple ci-dessus a été extrêmement simplifié et est complètement arbitraire. En pratique, les adresses sont sur des nombres de bits nettement plus importants. Par exemple, on peut prévoir des adresses sur 32 bits avec des résultats de 16 bits permettant donc un plus grand nombre de branchements différents à partir du même mot résultat.

Un tel mode de mise en oeuvre permet en quelque sorte de gérer plusieurs drapeaux de branchement en parallèle. Cela permet de réduire le temps perdu par le calcul d'adresse par rapport à des branchements directs classiques.

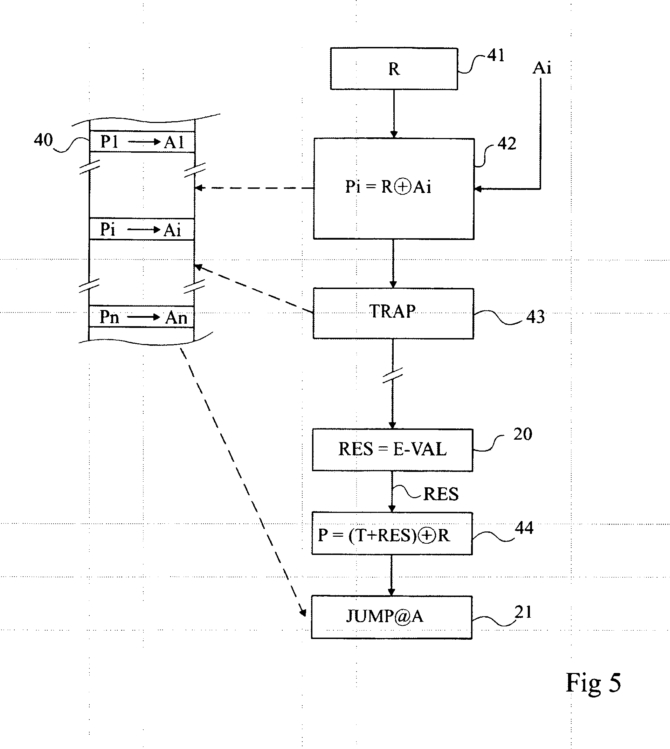

La figure 5 illustre, de façon très schématique et sous forme de blocs, un deuxième mode de mise en oeuvre de l'invention selon lequel la valeur résultat RES dépend d'un nombre aléatoire.

Selon ce mode de mise en oeuvre, à chaque début d'exécution d'un programme, on calcule un tableau d'adresses 40 que l'on stocke dans la mémoire associée au processeur exécutant le programme. En variante, le tableau est créé de façon dynamique lors de l'exécution du programme et peut être écrasé (remplacé) une fois qu'il n'est plus utile pour le branchement pour lequel il a été créé.

Le tableau d'adresses est obtenu en combinant, par une fonction de type OU-Exclusif, l'adresse valide Aᵢ avec un nombre aléatoire R (bloc 41, R). Le résultat de ce calcul (bloc 42, Pi = R⊕Aᵢ) fournit une adresse masquée par le nombre aléatoire R. La notation ⊕ désigne la combinaison OU-Exclusif, qui revient à une addition bit à bit. L'adresse masquée Pi est stockée dans la table 40. De façon similaire, des instructions pièges (bloc 43, TRAP) prévues pour être stockées aux autres adresses A₁, ..., Aᵢ₋₁, Aᵢ₊₁, ..., Aₙ de la mémoire 30 (figure 4) sont combinées avec le nombre aléatoire R et les résultats P₁, ..., Pᵢ₋₁, Pᵢ₊₁, ..., Pₙ correspondants sont stockés dans la table 40.

Par la suite, lors de l'exécution du programme, le calcul d'adresse 20, fonction de la valeur de consigne VAL et de la valeur courante E est effectuée comme précédemment.

Toutefois, l'étape suivante (bloc 44, P = (T+RES) ⊕R) consiste à masquer l'adresse T+RES par le nombre aléatoire mémorisé R, de façon à obtenir une adresse masquée P. Cette adresse P sert à aller chercher l'adresse correspondante A dans la table 40. Par la suite, le branchement (bloc 21, JUMP) s'effectue à l'adresse A extraite de la table 40.

Ce mode de mise en oeuvre a été exposé en relation avec une seule adresse Aᵢ valide. Bien entendu, comme pour l'autre mode de mise en oeuvre, il est possible de prévoir plusieurs fonctions valides.

Un avantage qu'il y a à masquer le calcul d'adresse par un nombre aléatoire tiré à chaque exécution est que aucun moyen répétable ne peut être trouvé pour accéder à une fonction valable d'une exécution à l'autre du programme. En effet, même si un pirate éventuel tombe sur une fonction valide lors d'une exécution, le résultat du calcul d'adresse à l'exécution suivante conduira à une autre adresse.

Bien entendu, la présente invention est susceptible de diverses variantes et modifications qui apparaîtront à l'homme de l'art. En particulier, les tailles respectives en nombre de bits des variables utilisées par l'invention dans le calcul d'adresse dépend de l'application et est à la portée de l'homme du métier à partir des indications fonctionnelles données ci-dessus. De plus, la mise en oeuvre pratique de l'invention par programmation est à la portée de l'homme du métier en utilisant des instructions de programmation conventionnelles. En outre, le choix entre un blocage du programme immédiat ou retardé à l'apparition d'un branchement sur une instruction piège et la réalisation d'un blocage permanent ou temporaire dépendent de l'application.

## Revendications

1. Procédé de réalisation d'au moins un branchement dans un programme exécuté par un processeur, **caractérisé en ce qu'**il consiste :
à déterminer (20) un résultat (RES) sur plusieurs bits comme indicateur d'un respect d'une condition, le résultat correspondant à une opération prenant en compte au moins une valeur fixe (VAL) et au moins une variable courante (E) ; et
à calculer (21 ; 44, 21) une adresse (A) de branchement fonction du résultat, des instructions (TRAP) de blocage du programme étant placées aux adresses respectives où conduit le branchement dans le cas où la variable (E) ne respecte pas la condition attendue.

2. Procédé selon la revendication 1, dans lequel le blocage du programme est retardé par rapport au branchement à l'adresse contenant l'instruction de blocage.

3. Procédé selon la revendication 1, dans lequel le résultat (RES) est fonction d'un nombre aléatoire (R) tiré à chaque début d'exécution du programme, une table de conversion d'adresses (40) étant mémorisée à chaque début d'exécution.

4. Procédé selon l'une quelconque des revendications 1 à 3, dans lequel un même résultat (RES) est utilisé pour des branchements conditionnels différents d'un même programme, chaque branchement conditionnel autorisé correspondant à un résultat différent.

5. Procédé pour réduire la vulnérabilité d'au moins un branchement dans un programme, **caractérisé en ce qu'**il consiste à réaliser le branchement au moyen du procédé selon l'une quelconque des revendications 1 à 4.

6. Processeur intégré d'exécution d'un programme, **caractérisé en ce qu'**il comporte des moyens de calcul d'adresse pour la mise en oeuvre du procédé selon l'une quelconque des revendications 1 à 5.

## Claims

1. A method for performing at least one jump in a program executed by a processor, consisting of:
determining (20) a result (RES) over several bits as an indicator that a desired condition has been complied with, the result corresponding to an operation taking into account at least one fixed value (VAL) and at least one current value (E); and
calculating (21; 44, 21) a jump address (A) which is a function of the result, trap instructions (TRAP) for blocking the program being placed at the respective addresses to which the jump leads in the case where the variable (E) does not comply with the expected condition.

2. The method of claim 1, wherein said blocking of the program is delayed with respect to said jump to the address containing the trap instruction.

3. The method of claim 1, wherein the result (RES) is a function of a random number (R) drawn at each beginning of a program execution, an address conversion table (40) being stored at each instruction beginning.

4. The method of any of claims 1 to 3, wherein a same result (RES) is used for different conditional jumps of a same program, each authorized conditional jump corresponding to a different result.

5. A method for reducing the vulnerability of at least one jump in a program, consisting of performing the jump by means of the method of any of claims 1 to 4.

6. An integrated program execution processor, comprising address calculation means to implement the method of any of claims 1 to 5.

## Patentansprüche

1. Ein Verfahren zum Ausführen von wenigstens einem Sprung in einem Programm, das durch einem Prozessor ausgeführt wird, wobei das Verfahren besteht aus:
Bestimmen (20) eines Ergebnisses (RES) über mehrere Bits, als einem Indikator, das ein Soll-Zustand erfüllt worden ist, wobei das Ergebnis einer Operation entspricht, die wenigstens einen festen Wert (VAL) und wenigstens einen aktuellen Wert (E) berücksichtigt; und
Berechnen (21; 44, 21) einer Sprungadresse (A), welche eine Funktion von dem Ergebnis ist, wobei Trap- bzw. Blockierinstruktionen (TRAP) zum Blockieren des Programms an den entsprechenden Adressen platziert sind, zu denen der Sprung führt und zwar in dem Fall, in dem die Variable (E) nicht den erwarteten Zustand erfüllt.

2. Verfahren nach Anspruch 1, wobei das Blockieren des Programms verzögert wird mit Bezug auf den Sprung zu der Adresse, die die Trap-Instruktion enthält.

3. Verfahren nach Anspruch 1, wobei das Ergebnis (RES) eine Funktion von einer Zufallszahl (R) ist, die bei jedem Beginn von einer Programmausführung gezogen wird, wobei eine Adresskonversionstabelle (40) bei jedem Instruktionsbeginn gespeichert wird.

4. Verfahren nach irgendeinem der Ansprüche 1 bis 3, wobei ein gleiches Ergebnis (RES) für verschiedene bedingte Sprünge von einem gleichen Programm genutzt wird, wobei jeder autorisierte bedingte Sprung einem anderen Ergebnis entspricht.

5. Ein Verfahren zum Reduzieren der Störempfindlichkeit bzw. der Vulnerabilität von wenigstes einem Sprung in einem Programm, bestehend aus dem Ausführen des Sprungs mittels des Verfahrens nach irgendeinem der Ansprüche 1 bis 4.

6. Ein integrierter Programmausführungsprozessor, der Adressberechnungsmittel aufweist zum Implementieren des Verfahrens nach irgendeinem der Ansprüche 1 bis 5.
